(19) **Europäisches Patentamt / European Patent Office / Office européen des brevets**

(11) **EP 4 270 809 A1**

(12) **EUROPEAN PATENT APPLICATION**
published in accordance with Art. 153(4) EPC

(43) Date of publication:
**01.11.2023 Bulletin 2023/44**

(21) Application number: **21911461.8**

(22) Date of filing: **21.12.2021**

(51) International Patent Classification (IPC):
**H04B 7/0408** (2017.01)       **H04B 7/024** (2017.01)
**H04B 7/06** (2006.01)       **H04W 72/04** (2023.01)
**H04W 74/00** (2009.01)       **H04L 5/00** (2006.01)

(52) Cooperative Patent Classification (CPC):
**H04B 7/024; H04B 7/0408; H04B 7/06; H04L 5/00;
H04W 72/04; H04W 74/00**

(86) International application number:
**PCT/KR2021/019461**

(87) International publication number:
**WO 2022/139394 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2020 KR 20200180814**

(71) Applicant: **LG Electronics Inc.**
**Yeongdeungpo-gu
Seoul 07336 (KR)**

(72) Inventors:
• **KANG, Jiwon**
  **Seoul 06772 (KR)**
• **KIM, Hyungtae**
  **Seoul 06772 (KR)**
• **KIM, Kyuseok**
  **Seoul 06772 (KR)**
• **GO, Seongwon**
  **Seoul 06772 (KR)**

(74) Representative: **Frenkel, Matthias Alexander
Wuesthoff & Wuesthoff
Patentanwälte PartG mbB
Schweigerstraße 2
81541 München (DE)**

(54) **METHOD AND DEVICE FOR RECOVERING BEAM FAILURE IN WIRELESS COMMUNICATION SYSTEM**

(57) Disclosed are a method and a device for performing a beam failure recovery in a wireless communication system. A method for performing, by a terminal, a beam failure recovery according to an embodiment of the present disclosure may comprise the steps of: receiving, from a base station, configuration information including information related to a CORESET in which a plurality of TCI states are configured; and detecting a BFI in a first BFD-RS set for a first CORESET group including the CORESET, wherein each of a first BFD-RS resource corresponding to a first TCI state among the plurality of TCI states configured for the CORESET and a second BFD-RS resource corresponding to a second TCI state among the plurality of TCI states is independently included in one of the first BFD-RS set for the first CORESET group and a second BFD-RS set for a second CORESET group, and the first BFD-RS resource is included in the first BFD-RS set.

FIG.8

RECEIVING CONFIGURATION INFORMATION INCLUDING INFORMATION RELATED TO A CORESET IN WHICH A PLURALITY OF TCI STATES ARE CONFIGURED FROM THE BASE STATION — S810

DETECTING A BFI IN THE FIRST BFD-RS SET FOR THE FIRST CORESET GROUP INCLUDING THE CORESET — S820

**Description**

[Technical Field]

The present disclosure relates to a wireless communication system, and in more detail, relates to a beam failure recovery method and apparatus in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for performing beam failure recovery in a wireless communication system.

In addition, an additional technical object of the present disclosure is to provide a method and apparatus for including each of a plurality of transmission configuration indicators configured in a control resource set in a specific beam failure detection resource set.

The technical objects to be achieved by the present disclosure are not limited to the above-described technical objects, and other technical objects which are not described herein will be clearly understood by those skilled in the pertinent art from the following description.

[Technical Solution]

In one embodiment of the present disclosure, a method for performing beam failure recovery (BFR) by a user equipment (UE) in a wireless communication system may include receiving, from a base station, configuration information including information related to a control resource set (CORESET) in which a plurality of transmission configuration indicator (TCI) states are configured; and detecting a beam failure instance (BFI) in a first beam failure detection-reference signal (BFD-RS) set for a first CORESET group including the CORESET, and each of a first BFD-RS resource corresponding to a first TCI state among the plurality of TCI states configured for the CORESET and a second BFD-RS resource corresponding to a second TCI state among the plurality of TCI states is independently included in one of the first BFD-RS set for the first CORESET group or the second BFD-RS set for the second CORESET group, and the first BFD-RS resource is included in the first BFD-RS set.

In another embodiment of the present disclosure, a method for performing beam failure recovery (BFR) by a base station in a wireless communication system may include transmitting, to a user equipment (UE), configuration information including information related to a control resource set (CORESET) in which a plurality of transmission configuration indicators (TCI) states are configured; and receiving, from the UE, a beam failure recovery request (BFRQ) based on a beam failure instance (BFI) being detected more than a certain number of times in a first bean failure detection (BFD)-reference signal (RS) configured for a first CORESET group including the CORESET by the UE, and each of a first BFD-RS resource corresponding to a first TCI state among the plurality of TCI states and a second BFD-RS resource corresponding to a second TCI state among the plurality of TCI states is independently included in one of the first BFD-RS set or the second BFD-RS set for the second CORESET group, and the first BFD-RS resource may be included in the first BFD-RS set.

[Technical Effects]

According to an embodiment of the present disclosure, a method and an apparatus for performing beam failure recovery may be provided in a wireless communication system.

According to an embodiment of the present disclosure, a method and apparatus for including each of a plurality of transmission configuration indicators set in a control resource set in a specific beam failure detection resource set may be provided.

According to an embodiment of the present disclosure, even when a single frequency broadcasting network transmission is performed in a plurality of control resource set groups, it may support the beam failure recovery operation for each specific control resource set group.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of transmitting multiple TRPs in a wireless communication system to which the present disclosure may be applied.
FIG. 8 is a diagram for describing a beam failure recovery operation of a terminal according to an embodiment of the present disclosure.
FIG. 9 is a diagram for describing a beam failure recovery operation of a base station according to an embodiment of the present disclosure.
FIG. 10 is a diagram for describing a signaling procedure of a network side and a terminal according to the present disclosure.
FIG. 11 illustrates a block diagram of a wireless communication system according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal

- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

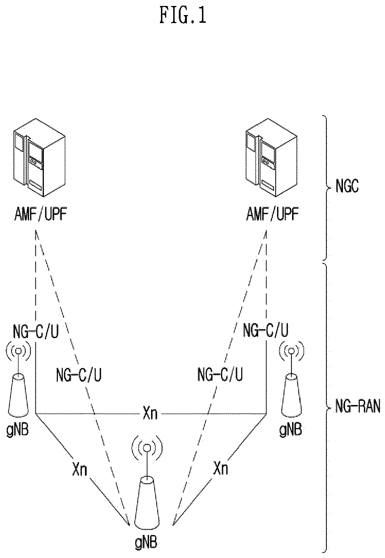

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

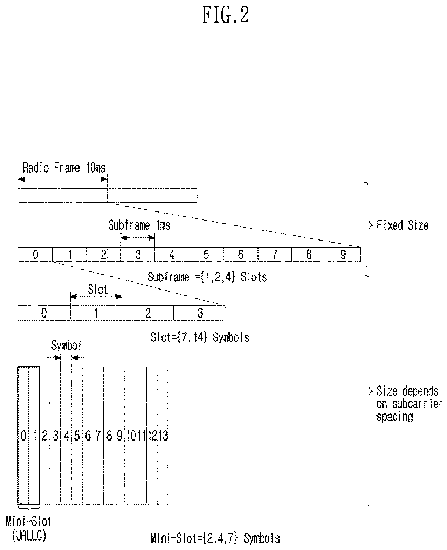

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, p) . In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2) . FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

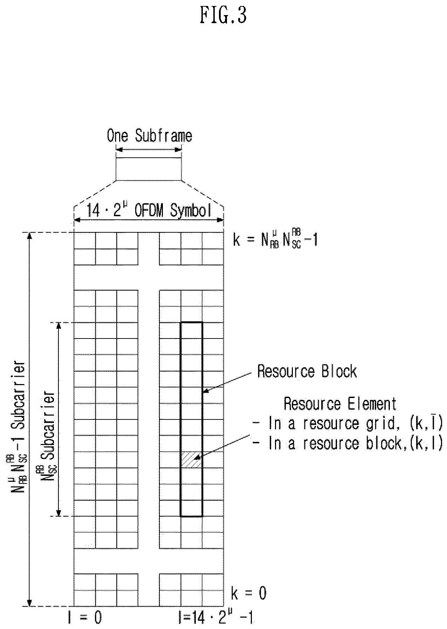

FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0, ...,$N_{RB}^{\mu}N_{sc}^{RB}$-1 is an index in a frequency domain and l'=0, ...,$2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

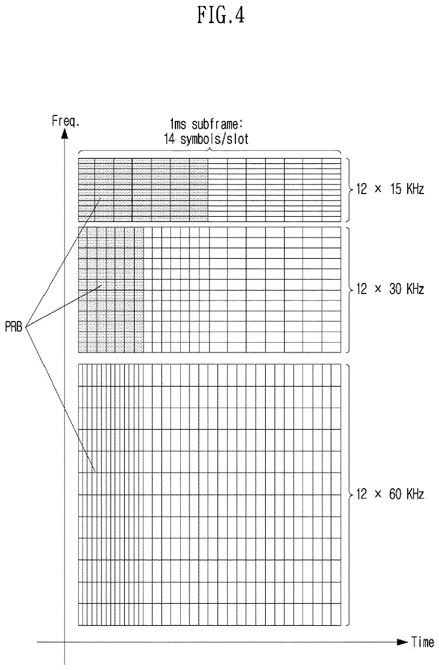

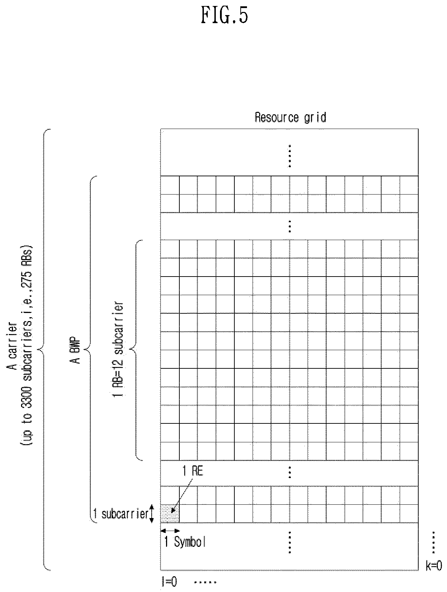

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

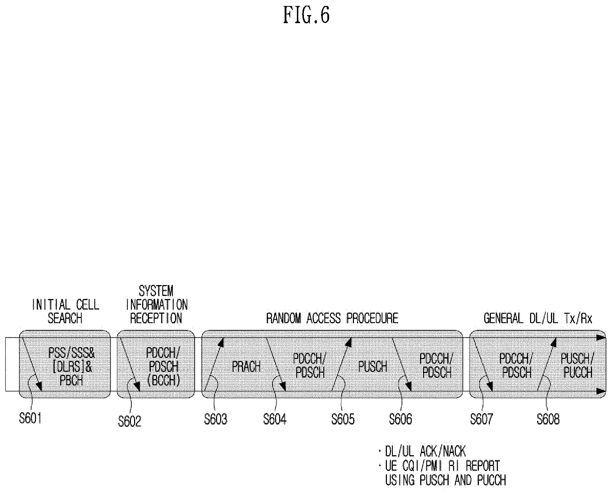

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to |
| | a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

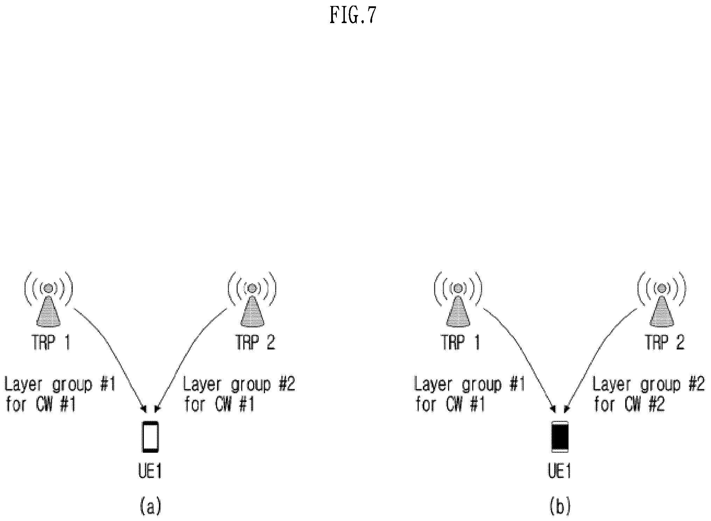

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method and/or a TDM (time division multiplexing) method.

Regarding a method for multiple TRPs based URLLC scheduled by single DCI, the following methods are discussed.

1) Method 1 (SDM): Time and frequency resource allocation is overlapped and n (n<=Ns) TCI states in a single slot

1-a) Method 1a.

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

The same TB having one DMRS port associated with multiple TCI state indexes is transmitted in one layer at one transmission time (occasion) or the same TB having multiple DMRS ports one-to-one associated with multiple TCI state indexes is transmitted in one layer.

In case of the above-described method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.

The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.

For the above-described method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at all transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- All transmission time (occasion) across K slots uses a common MCS with a single or multiple DMRS port(s).
- A RV/TCI may be the same or different at a different transmission time (occasion).

Downlink multiple TRP (M-TRP) URLLC transmission operation

In the basic MIMO system, a single DCI-based or multi DCI-based PDSCH transmission operation is applied. In the improved MIMO system, the remaining M-TRP transmissions (e.g., PDCCH, PUCCH, PUSCH, etc.) except for PDSCH may be applied.
The DL M-TRP URLLC transmission method means a method in which multiple TPRs transmit the same data/DCI using different space (e.g., layer/port)/time/frequency resources. For example, TRP 1 may transmit specific data/DCI in resource 1, and TRP 2 may transmit the specific data/DCI (i.e., the same data/DCI) in resource 2.
That is, when the DL M-TRP URLLC transmission scheme is configured, the UE may receive the same data/DCI using different space/time/frequency resources. At this time, the UE may receive an indication of the QCL RS/type (i.e., DL TCI state) used in the space/time/frequency resource receiving the corresponding data/DCI from the base station.
For example, when corresponding data/DCI is received in resource 1 and resource 2, the UE may receive indication from the base station for the DL TCI state used in resource 1 and the DL TCI state used in resource 2. High reliability may be achieved by the UE receiving corresponding data/DCI through resource 1 and resource 2. This M-TRP URLLC transmission scheme may be applied to PDSCH/PDCCH.
In addition, in describing the present disclosure, when receiving data/DCI/UCI through a specific space/time/frequency resource, using (or mapping) a specific TCI state means (in case of DL) estimating a channel from DMRS using a QCL type and QCL RS indicated by a specific TCI state in a specific space/time/frequency resource and receiving/demodulating data/DCI/UCI with the estimated channel.
The M-TRP eMBB transmission method means a method in which M-TRP transmits different data/DCI using different space/time/frequency resources. If the M-TRP eMBB transmission method is configured, the UE may receive a plurality of TCI states from the base station through DCI, and may assume that data received using QCL RSs indicated by each of the plurality of TCI states is different data.

In addition, since the RNTI for M-TRP URLLC and the RNTI for M-TRP eMBB are separately used, the UE may determine whether specific transmission/reception is M-TRP URLLC transmission/reception or M-TRP eMBB transmission/reception. For example, when the RNTI for URLLC is used and CRC is masked for DCI, the UE may recognize the transmission as URLLC transmission. And, when the RNTI for eMBB is used and CRC masked for DCI, the UE may identify the corresponding transmission as eMBB transmission. As another example, the base station may configure the M-TRP URLLC transmission/reception method or the M-TRP eMBB transmission/reception method to the UE through new signaling.

For convenience of description of the present disclosure, it is assumed that 2 TRPs cooperate with each other to perform transmission/reception operations, but it is not limited thereto. That is, the present disclosure can be extended and applied even in a multiple TRP environment of 3 or more, and can be extended and applied even in an environment where transmission/reception is performed using different panels or beams in the same TRP. The UE may recognize different TRPs as different TCI states. When the UE transmits/receives data/DCI/UCI using TCI state 1, it means that data/DCI/UCI/ is transmitted/received from (or through TRP 1).

Also, in describing the present disclosure, the meaning that a plurality of base stations (i.e., M-TRPs) repeatedly transmit the same PDCCH may mean that the same DCI is transmitted through a plurality of PDCCH candidates, and is the same as the meaning that a plurality of base stations repeatedly transmit the same DCI. Here, two DCIs having the same DCI format/size/payload may be regarded as the same DCI.

Alternatively, if the scheduling result is the same even though the payloads of the two DCIs are different, the two DCIs may be regarded as the same DCI. For example, the time domain resource allocation (TDRA) field of the DCI may determine a slot/symbol position of data and a slot/symbol position of A(ACK)/N(NACK) relative to a DCI reception time point. In this case, when the DCI received at time n and the DCI received at time n+1 indicate the same scheduling result to the UE, the TDRA fields of the two DCIs are different, and as a result, the DCI payloads are different. Accordingly, when the scheduling result is the same even though the payloads of the two DCIs are different, the two DCIs may be regarded as the same DCI.

Alternatively, even if the payloads of the two DCIs are different and the scheduling results are not the same, if the scheduling result of one DCI is a subset of the scheduling result of the other DCI, the two DCIs may be regarded as the same DCI. For example, if the same data is TDM and repeatedly transmitted N times, DCI 1 received before the first data indicates data repetition (or scheduling) N times, and DCI 2 received before the second data indicates N-1 data repetition (scheduling). At this time, the scheduling result (or data) of DCI 2 becomes a subset of the scheduling result (or data) of DCI 1, and both DCIs have scheduling results for the same data. Therefore, even in this case, the two DCIs may be regarded as the same DCI.

And, in describing the present disclosure, that a plurality of base stations (i.e., M-TRP) divide and transmit the same PDCCH may mean that one DCI is transmitted through one PDCCH candidate, but TRP 1 transmits some resources defined for the corresponding PDCCH candidate, and TRP 2 transmits the remaining resources.

As an M-TRP URLLC transmission method, a method in which each TRP transmits the same PDSCH/PDCCH in different space/time/frequency resources as well as a method in which the same PDSCH/PDCCH is repeatedly transmitted in the same space/time/frequency resource (i.e., single frequency network (SFN) transmission method) may be applied. In the case of the SFN transmission method, since a plurality of TRPs may transmit the same PDCCH/PDSCH DMRS port together, a plurality of TCI states may be configured/indicated for the same PDCCH/PDSCH. In particular, in order to apply the SFN transmission method to PDCCH transmission, a conventional method in which one TCI state is indicated per CORESET may be changed to a method in which multiple TCI states are indicated per CORESET.

M-TRP BFR related operations

When the above-described basic BFR operation or the enhanced BFR operation is directly applied to the M-TRP transmission environment, even if a beam failure occurs in a specific CORESET, the UE may determine that it is not a beam failure situation. For example, if all CORESETs transmitting PDCCH in a specific TRP are in a beam failure situation, or there is a CORESET that is not beam failure among CORESETs transmitting PDCCH in other TRPs, the UE may not determine that the current situation is a beam failure situation.

In order to solve this problem, a TPR-specific BFR method may be applied. That is, when a beam failure occurs for one or more serving beams corresponding to a specific TRP, a TPR-specific BFR method for quickly recovering it may be applied. In the TPR-specific BFR method, when beam failure occurs for one or more partial beams (belonging to a specific TRP) among one or more PDCCH beams or serving beams, it may refer to a method in which the UE reports a beam failure condition to the base station and recovers, that is, a partial BFR method.

In order to apply the M-TRP BFR method, a BFD procedure for a specific TRP or each TRP may be performed independently. To this end, the definition of a specific TRP or a BFD-RS set for each TRP should be determined first.

As with the basic BFR operation or the improved BFR operation described above, the determination method for the BFD-RS set may include an implicit BFD-RS set determination method and an explicit BFD-RS set determination method.

The explicit BFD-RS set determination method may refer to a method in which the base station explicitly configures the BFD-RS set corresponding to each TRP. That is, a plurality of BFD-RS sets corresponding to a plurality of TRPs in the same CC/BWP may be configured by the base station, respectively, and the UE may independently perform a BFD procedure (e.g. BFI count, etc.) for each configured BFD-RS set.

The implicit BFD-RS set determination method is a method of determining a BFD-RS using a TCI state (or QCL Type-D RS in TCI state) configured in CORESET, similar to the above-described basic BFR operation or improved BFR operation, and it is a method of monitoring whether a PDCCH transmit beam has a beam failure.

In the basic BFR operation or the improved BFR operation described above, the BFD procedure was performed by configuring the BFD-RS set for all of the CORESETs configured for each CC/BWP. In more enhanced BFR operation, a BFD-RS set (e.g., a BFD-RS set for each TRP) may be configured for some CORESET(s) among a plurality of CORESETs set for each CC/BWP (or by dividing some CORESET(s) by each), and a BFD procedure (e.g., BFI count, etc.) may be performed independently for each BFD-RS set.

The method of dividing a plurality of CORESETs in CC/BWP by TRP may include 1) a method of dividing CORESETs for each TRP based on the CORESET pool configuration introduced for M-TRP PDSCH transmission based on multiple DCI, and 2) a method of dividing CORESETs by TRP based on a separately set CORESET group.

That is, the method 1) is a method of configuring a BFD-RS set based on each CORESET pool index, and the method 2) is a method of configuring each BFD-RS set based on a separately set CORESET group index. The method 2) may support not only TRP-specific BFD but also other use cases (e.g., performing BFR with only some of the serving beams within the same TRP, etc.).

BFD-RS set configuration method to include multiple TCI states set in CORESET

As described above, in order to support M-TRP PDCCH URLLC transmission (e.g., SFN transmission method or other TDM/FDM/SDM repetition/fraction transmission method), a plurality of TCI states may be configured in one CORESET. Configuring a plurality of TCI states in a specific CORESET means that a plurality of TRPs/panels/beams may participate in PDCCH transmission in the specific CORESET.

Here, when configuring a TRP-specific BFD-RS set in an implicit manner based on a plurality of TCI states configured in CORESET, ambiguity may arise as to whether the plurality of TCI states should be included in the BFD-RS set and, if included, in which BFD-RS set.

Hereinafter, for convenience, the present disclosure will be described based on a TRP-specific BFD-RS set configuration, but is not limited thereto. The present disclosure may be applied to all transmission entities (e.g., TRP, panel within TRP, and beam within TRP/panel) transmitting any independent QCL RS.

And, in describing the present disclosure, the TCI state may be interpreted as a QCL RS or a QCL RS set. When the TCI state is interpreted as a set of QCL RSs, the QCL RSs may be RSs corresponding to different QCL parameters.

Alternatively, the TCI state in the high frequency band may include a QCL type-D RS for UE beam configuration. Here, QCL Type-D means a spatial parameter, that is, a beam-related parameter. In describing the present disclosure, If the TCI status includes QCL Type-D RS as well as QCL RS for other QCL parameters, it means that the TCI RS or TCI state may mean a QCL Type-D RS, an RS including at least a QCL Type-D RS, or any type of QCL RS.

However, the QCL Type-D RS may be omitted in a low frequency band like FR 1. In this case, the TCI RS or TCI state may mean a QCL type other than QCL Type-D (i.e., some of QCL RSs for delay and/or doppler related parameters). Hereinafter, for convenience of description, a CORESET including a plurality of TCI states is expressed as mTCI-CORESET.

As a method of implicitly configuring a TRP-specific BFD-RS set, a method of configuring a BFD-RS set according to a CORESET pool ID may be included. That is, CORESET pools including one or more CORESETs may be distinguished for multiple DCI-based PDSCH transmission operations, and a BFD-RS set can be configured using TCI RSs of one or more CORESETs belonging to the same CORESET pool.

As another method of implicitly configuring a TRP-specific BFD-RS set, a method of configuring a BFD-RS set for each CORESET group configured in a separate indication/configuration may be included. That is, apart from the CORESET pool configuration, a CORESET group for the purpose of configuring a TRP-specific BFD-RS set is configured, and a BFD-RS set may be configured with TCI RSs of one or more CORESETs belonging to the same CORESET group.

mTCI-CORESET may belong to a specific CORESET pool ID. Even in a CC/BWP that does not perform multi-DCI-based PDSCH transmission, the CORESET pool ID may be defined as 0. Including one or more mTCI-CORESETs in a CC/BWP operating as a single CORESET pool may mean that multiple TRPs transmit PDCCHs for the one or more CORESETs, so TRP-specific BFRs may be required.

In the case of the above method (method of configuring a BFD-RS set according to the CORESET pool ID and method of configuring a BFD-RS set for each CORESET group configured in a separate indication/configuration), it is assumed that one TRP is transmitting one CORESET. Therefore, when a TRP-specific BFR operation is performed in a CC/BWP where mTCI-CORESET is configured, a BFD-RS set cannot be configured for each TRP in the above-described method.

Embodiment 1

For each of the plurality of TCI states configured in the mTCI-CORESET, which BFD-RS set (corresponding to CORESET pool/group) to include or exclude may be determined according to a predetermined rule or determined by configuration/indication of the base station (or configured/indicated rules).

Here, the 'rule' may be defined as a rule related to a CORESET pool/group ID including mTCI-CORESET or an unrelated rule. Hereinafter, various embodiments of the 'rule' will be described.

The UE may include only one specific TCI state (or a specific part of the TCI state) among a plurality of TCI states for the mTCI-CORESET in the BFD-RS set for the corresponding CORESET pool/group (or TRP), and may not include the remaining TCI states in the BFD-RS set for the corresponding COREST pool/group (rule 1). Here, the corresponding CORESET pool/group means a CORESET pool/group including mTCI-CORESET.

Alternatively, the UE may include only one specific TCI state (or a specific part of the TCI state) among a plurality of TCI states for the mTCI-CORESET in the BFD-RS set for the corresponding CORESET pool/group (or TRP), and may include other TCI states in a BFD-RS set for another CORESET pool/group (or TRP) (rule 2).

Alternatively, the UE may include all of the plurality of TCI states for the mTCI-CORESET in the BFD-RS set for the corresponding CORESET pool/group (or TRP) (rule 3).

Alternatively, by a pre-determined/configured rule (e.g., a rule that the nth TCI is included in the nth BFD-RS set, etc.) regardless of the corresponding CORESET pool/group, a set of BFD-RSs for the CORESET pool/group (or TRP) including each of a plurality of TCI states or specific (some) TCI states for the mTCI-CORESET may be determined (rule 4).

In Rule 1 to Rule 4, the 'specific (partial) TCI state' may be a TCI state determined according to a specific rule (e.g., a rule for determining the first M TCI status or the last M TCI state among multiple TCI statuses, etc.), a TCI state configured/indicated by a base station, or a TCI state selected by a UE (by a specific rule).

For example, if one of the TCI states for an mTCI-CORESET transmission is included in the TRP for the CORESET pool/group containing that CORESET and the other is included in a TRP for another CORESET pool/group or in a TRP that does not correspond to any CORESET pool/group, Rule 1 may be usefully applied.

As another example, if one of the TCI states for an mTCI-CORESET transmission is included in the TRP for the CORESET pool/group containing that CORESET, and the other is included in the TRP for another CORESET pool/group, Rule 2 may be usefully applied.

As another example, if all TCI states for mTCI-CORESET transmission are included in the TRP for the CORESET pool/group that includes the corresponding CORESET, Rule 3 may be usefully applied.

As another example, rule 4 is a rule for constructing a BFD-RS set according to rules defined (or set) regardless of the CORESET pool/group including the mTCI-CORESET.

As an example of rule 4, a BFD-RS set may be configured based on the order of TCI states for mTCI-CORESET. When two TCI states are configured in CORESET, the first TCI state may be included in the first BFD-RS set, and the second TCI state may be included in the second BFD-RS set.

Rule 4 may be extended not only to mTCI-CORESET but also to CORESET in which a single TCI state is set. For example, a CORESET in which a single TCI state is configured may always be included in the first BFD-RS set.

As another embodiment of the present disclosure, when two (or more) CORESET pools are configured, the above-described rule for each pool index may be applied.

For example, it is assumed that each of the CORESET pools having pool indexes of 0 and 1 includes a CORESET with one TCI state configured (hereinafter referred to as 'single TCI CORESET') and a CORESET with two TCI states configured (hereinafter referred to as '2 TCI CORESET') . A single TCI CORESET included in the CORESET pool with pool index 0 is included in BFD-RS #0, and the first TCI state of CORESET with two TCI states configured is included in BFD-RS #0, and the second TCI state may be included in BFD-RS #1. A single TCI CORESET included in the CORESET pool with pool index 1 is included in BFD-RS #2, and the first TCI state of CORESET in which two TCI states are configured may be included in BFD-RS #2, and the second TCI state may be included in BFD-RS #3.

Since the above-described rules (or methods) may have different useful scenarios, a plurality of rules (or methods) may be supported in a communication system. At this time, the base station may configure/indicate which rule (or method) to apply to the UE. The configuration/indication may be performed through signaling such as at least one of RRC, MAC-CE, and DCI.

As an embodiment of the present disclosure, it is assumed that there is a communication system supporting all of rule 1, rule 2, and rule 3, and two TCI states are configured in a specific CORESET. The base station may configure/indicate the first TCI state among the TCI states configured in a specific CORESET to be included in the BFD-RS set for the CORESET pool/group (or TRP) including the specific CORESET and may configure/indicate the second TCI state to be included or excluded from a specific BFD-RS set according to one of rules 1 to 3. Specifically, the base station may indicate/configure the UE whether to include the second TCI state in 1) the BFD-RS set for the corresponding CORESET pool/group (rule 3) or 2) the BFD-RS set for the other CORESET pool/group (rule 2), or 3) may configure/indicate the UE whether to not include the second TCI state in the BFD-RS set for any CORESET pool/group (rule 1).

As another embodiment of the present disclosure, it is assumed that there is a communication system supporting rule 1 and rule 3, and two TCI states are configured in a specific CORESET. The base station may configure/indicate the first TCI state among the TCI states configured in the corresponding CORESET to be included in the BFD-RS set for the CORESET pool/group (or TRP) including the corresponding CORESET, and may configure/indicate the second TCI state among the TCI states configured in the corresponding CORESET to be included or excluded from a specific BFD-RS set according to rule 1 or rule 3. Specifically, the base station may configure/indicate the UE whether to include the second TCI state in the BFD-RS set for the corresponding CORESET pool/group (rule 3) or not (rule 1).

For the above configuration/indication, connection to a plurality of CORESET pools/groups may be allowed for the mTCI-CORESET (from the viewpoint of the mapped BFD-RS set).

For example, if mTCI-CORESET is included in one particular CORESET pool/group, Rule 3 may apply. In addition, if mTCI-CORESET is included in multiple CORESET pools/groups, Rule 1, Rule 2, or Rule 4 may be applied.

As another example, the BFD-RS set for the BFD-RS set for the first CORESET pool/group includes only the i-th TCI state of mTCI-CORESET (e.g., when m is 2 and i is 1), and the BFD-RS set for the BFD-RS set for the second CORESET pool/group may include only the j-th TCI state (e.g., when m is 2 and j is 2) of mTCI-CORESET. Here, when mTCI-CORESET belongs to both CORESET pools/groups, each TCI state may be included in a BFD-RS set for each CORESET pool/group.

As another example, the i-th TCI state of mTCI-CORESET (for example, when m is 2 and i is 1) is included in the first CORESET pool/group among the CORESET pools/groups that contain that CORESET, and the j-th TCI state of mTCI-CORESET (e.g., when m is 2 and i is 2) may be specified/configured to be included in the second CORESET pool/group of CORESET pools/groups including the corresponding CORESET.

As another example, the i-th (e.g., when m is 2 and i is 1) TCI state of mTCI-CORESET is included in CORESET pool/group ID 0 or BFD-RS set#0, and the j-th TCI state of mTCI-CORESET (e.g., when m is 2 and i is 2) may be defined/configured to be included in CORESET pool/group ID 1 or BFD-RS set #1.

Connection to a plurality of CORESET pools/groups may not be applied to existing CORESET pool-related operations (e.g., DCI reception, HARQ-related operations, etc.). An operation related to an existing CORESET pool may be applied and operated to a single CORESET pool (e.g., the first pool among multiple connected CORESET pools).

When the above-described plurality of rules are supported in the communication system, a rule to be applied among the plurality of rules may be determined by a predetermined method.

For example, the rule to be applied among the plurality of rules described above is determined based on a CORESET pool/mTCI-CORESET pool included in the group/the number of mTCI-CORESETs included in the group/the total number of TCI states (or QCL Type-D RSs) configured in percentage and/or mTCI-CORESET.

For example, Rule 3 may be applied if the number of mTCI-CORESETs included in mTCI-CORESETs included in the CORESET pool/group or the total number of TCI states (for mTCI-CORESET) is less than (or greater than) or equal to the first threshold, and Rule 1, Rule 2, or Rule 4 may be applied if the corresponding number is greater than (or less than) or equal to the first threshold. Here, the first threshold may be a predefined value (or a value determined by a predefined rule) or a value configured by higher layer signaling.

As another example, if the number of TCI states for mTCI-CORESET is less than or equal to the second threshold (e.g., 2), rule 3 is applied, and if it exceeds the second threshold, rule 1, rule 2, or rule 4 may be applied. Here, the second threshold may be a predefined value (or a value determined by a predefined rule) or a value configured by higher layer signaling.

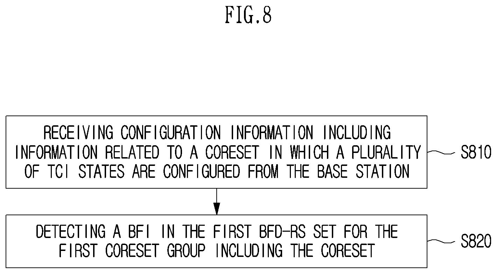

FIG. 8 is a diagram for explaining a beam failure recovery operation of a UE according to an embodiment of the present disclosure.

The UE may receive configuration information including information related to a control resource set (CORESET) in which a plurality of transmission configuration indicators (TCI) states are configured from the base station (S810).

A TCI state may correspond to one or more RSs (or one set of RSs). That is, the TCI state may include information indicating one or more RSs having a QCL (quasi co-location) relationship. The ID of one or more RSs (or one RS set) corresponding to the TCI state may indicate/reference an RS (e.g. CSI-RS, SSB, etc.) for QCL indication (e.g., QCL type-D related to spatial parameters).

Hereinafter, the present disclosure will be described on the assumption that two TCI states are configured in CORESET according to configuration information received from a base station. However, this is only one embodiment, and the present disclosure may be extended and applied even when three or more TCI states are configured in CORESET.

Among the plurality of TCI states configured for the corresponding CORESET, the first TCI state may correspond to the first beam failure detection reference signal (BFD-RS) resource, and the second TCI state may correspond to the second BFD-RS resource. That is, an RS having a QCL relationship indicated by the first TCI state may correspond to the first BFD-RS, and an RS having a QCL relationship indicated by the second TCI state may correspond to the first BFD-RS. Here, each BFD-RS resource may include at least one of a CSI-RS or a synchronization signal block (SSB) resource, but is not limited thereto. Also, the "RS having a QCL relationship" indicated by the TCI state may be referred to as a "QCL source RS" or a "QCL reference RS".

Each of the first BFD-RS resource corresponding to the first TCI state and the second BFD-RS resource corresponding to the second TCI state may be independently included in one of the first BFD-RS set for the first CORESET group including the corresponding CORESET or the second BFD-RS set for the second CORESET group.

Here, the CORESET group may refer to a CORESET pool introduced for multiple DCI-based M-TRP PDSCH transmission or a group including one or more CORESETs for a separate purpose. And, each of the CORESET group and the BFD-RS set may correspond to TRP. For example, the first CORESET group or the first BFD-RS set may correspond to TRP 1, and the second CORESET group or second BFD-RS set may correspond to TRP 2.

As an embodiment of the present disclosure, the first BFD-RS resource may be included in the first BFD-RS set. That is, the first TCI state among the plurality of TCI states configured in the corresponding CORESET may be included in the first BFD-RS set corresponding to the first CORESET group (or TRP 1).

In addition, the second BFD-RS resource may be included in the first BFD-RS set or the second BFD-RS set independently of the first BFD-RS resource. However, this is only one embodiment, and the second BFD-RS resource may not be included in both the first BFD-RS set and the second BFD-RS set.

According to an embodiment of the present disclosure, a UE may receive indication information indicating a BFD-RS set in which the second BFD-RS resource is to be included from the base station. The indication information may indicate a rule by which a BFD-RS set to include the second BFD-RS resource is determined, or may explicitly indicate a BFD-RS set to include the second BFD-RS resource. In addition, the indication information may be included in at least one of an RRC message, MAC-CE, or DCI and transmitted from the base station to the terminal. The UE may include the second BFD-RS in a specific BFD-RS set based on the received indication information.

As another embodiment of the present disclosure, the second BFD-RS resource may be included in the first BFD-RS set or the second BFD-RS set according to a predefined rule.

For example, the second BFD-RS resource may be included in either the first BFD-RS set or the second BFD-RS set, or may not be included in any BFD-RS set, based on the number of TCI states configured in the corresponding CORESET and a predetermined threshold value. For example, if the number of TCI states configured in mTCI-CORESET exceeds the threshold value (e.g., 2), the second BFD-RS resource may be included in the second BFD-RS set or may not be included in any BFD-RS set. When the number of TCI states set in mTCI-CORESET is greater than or equal to a threshold value (e.g., 2), the second BFD-RS resource may be included in the first BFD-RS set.

As another example, the second BFD-RS resource may be included in either the first BFD-RS set or the second BFD-RS set, or may not be included in any BFD-RS set, based on the number of CORESETs in which a plurality of TCI states are configured among the total number of CORESETs included in the first CORESET group. That is, the second BFD-RS set may be included in either the first BFD-RS set or the second BFD-RS set, or may not be included in any BFD-RS set, based on whether the number or ratio of CORESETs in which a plurality of TCIs are configured in the first CORESET group exceeds a specific value.

As another example, the second BFD-RS resource may be included in one of the first BFD-RS set and the second BFD-RS set, or may not be included in any BFD-RS set, based on whether the corresponding CORESET is included only in the first CORESET group or included in both the first CORESET group and the second CORESET group. For example, when the corresponding CORESET is included only in the first CORESET group, the second BFD-RS resource may be included in the first BFD-RS set. And, when the corresponding CORESET is included in the first CORESET group and the second CORESET group, the second BFD-RS resource may be included in the second BFD-RS set or not included in any BFD-RS set.

The UE may detect a beam failure instance (BFI) in the first BFD-RS set for the first CORESET group including the corresponding CORESET (S820). That is, the UE may perform a BFD operation based on one or more BFD-RSs included in the first BFD-RS set for the first CORESET group (or TRP 1).

In another embodiment of the present disclosure, based on the second BFD-RS resource being included in the second BFD-RS set, the UE may detect the BFI in the second BFD-RS set. That is, the UE may perform a BFD operation based on the second BFD-RS included in the second BFD-RS set for the second CORESET group (or TRP 2).

The UE may perform BFD operation by detecting a BFI in each of the first BFD-RS set for the first CORESET group and the second BFD-RS set for the second CORESET group.

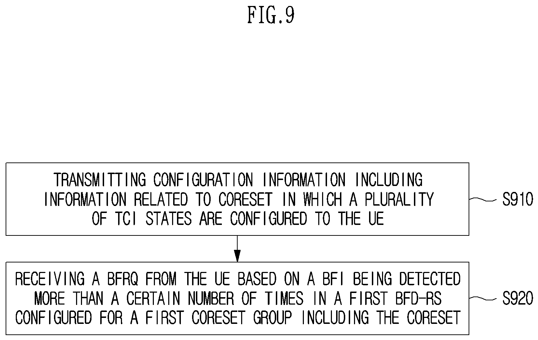

FIG. 9 is a diagram for describing a beam failure recovery operation of a base station according to an embodiment of the present disclosure.

The base station may transmit configuration information including information related to CORESET in which a plurality of TCI states are configured to the UE (S910).

Since specific examples and descriptions related to the TCI state, CORESET, CORESET group, and BFD-RS have been described with reference to FIG. 8, duplicate descriptions will be omitted.

Each of the first BFD-RS resource corresponding to the first TCI state and the second BFD-RS resource corresponding to the second TCI state may be independently included in one of the first BFD-RS set for the first CORESET group including the corresponding CORESET or the second BFD-RS set for the second CORESET group.

The base station may transmit indication information about a BFD-RS set to include each of the first BFD-RS resource and the second BFD-RS resource to the UE. The indication information may indicate a rule by which a BFD-RS set to include the second BFD-RS resource is determined, or may explicitly indicate a BFD-RS set to include the second BFD-RS resource. And, the base station may include indication information in at least one of an RRC message, MAC-CE, or DCI and transmit it to the UE.

Since the rule (or embodiment) for including or excluding the first BFD-RS resource and the second BFD-RS resource from a specific BFD-RS set has been described with reference to FIG. 8, duplicate descriptions will be omitted.

The base station may receive a beam failure request (BFRQ) from the UE based on a beam failure instance (BFI) being detected more than a certain number of times in a first bean failure detection (BFD)-reference signal (RS) configured for a first CORESET group including the CORESET (S920). Here, the certain number of times may mean a value configured by an upper layer parameter (e.g., 'beamFailureInstanceMaxCount').

As another embodiment of the present disclosure, based on the second BFD-RS resource being included in the second BFD-RS set and based on a predetermined number of BFIs being detected in the second BFD-RS set by the UE, the base station may receive the BFRQ from the UE.

That is, the UE may detect whether or not a beam has failed for each of the BFD-RS sets for the first and second CORESETs, the base station may receive a BFRQ for recovery of a beam failure detected in each BFD-RS set from the UE.

When a beam failure occurs, the base station may configure an RS list including candidate beam RSs that may be replaced for the UE, and may configure a dedicated PRACH resource for each candidate beam RS. The UE may select one or more beam RSs among a plurality of candidate beams included in the RS list, and transmit a PRACH resource and a preamble directly or indirectly connected/configured with the selected beam RS to the base station as BFRQ.

Thereafter, the base station may transmit a response to the BFRQ to the UE. When the contention-free PRACH resource and the preamble are received from the UE as BFRQ, the base station may transmit a response including an uplink grant DCI included in the PDCCH masked with C-RNTI to the UE. When contention-free PRACH resources and preambles are received from the UE as BFRQ, the base station may transmit a response to the UE using CORESET configured for a basic collision PRACH-based random access procedure.

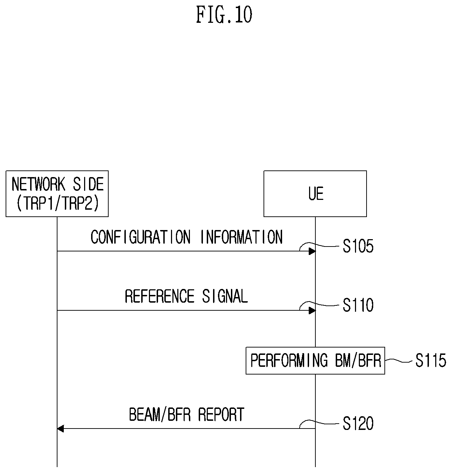

FIG. 10 is a diagram for describing a signaling procedure of a network side and a UE according to the present disclosure.

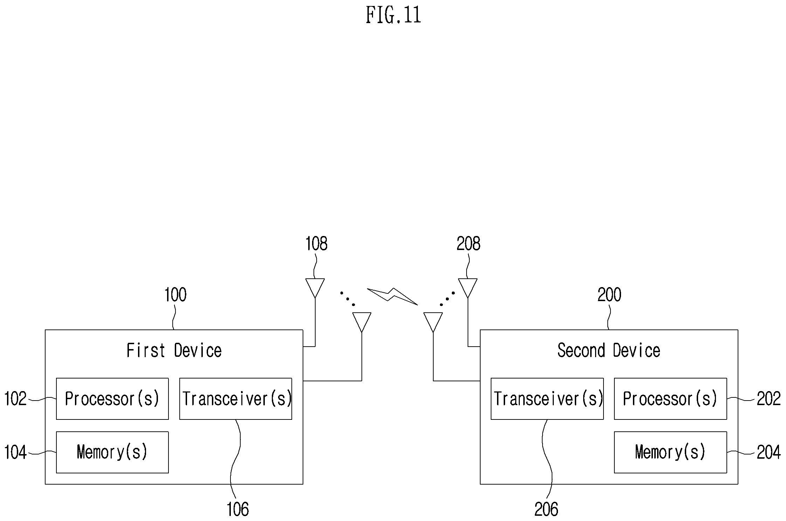

FIG. 10 describes an example of signaling between a network side and a UE in an M-TRP situation to which examples of the present disclosure described above (e.g., a combination of one or more of embodiment 1 or detailed embodiments thereof) may be applied. Here, UE/a network side is illustrative and may be applied by being substituted with a variety of devices as described by referring to FIG. 11. FIG. 10 is for convenience of description, and it does not limit a scope of the present disclosure. In addition, some step(s) shown in FIG. 10 may be omitted according to a situation and/or a configuration, etc. In addition, the above-described uplink transmission and reception operation, a M-TRP-related operation, etc. may be referred to or used for an operation of a network side/UE in FIG. 10.

In the following description, a network side may be one base station including a plurality of TRPs or may be one cell including a plurality of TRPs. Alternatively, a network side may include a plurality of RRHs(remote radio head)/RRUs(remote radio unit). In an example, an ideal/non-ideal backhaul may be configured between TRP 1 and TRP 2 configuring a network side. In addition, the following description is described based on a plurality of TRPs, but it may be equally extended and applied to transmission through a plurality of panels/cells and may be extended and applied to transmission through a plurality of RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID). In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information from the network side through/using TRP1 and/or TRP2 (S105). The configuration information may include information related to CORESET in which a plurality of TCI states are configured. The configuration information may include information related to network-side configuration (i.e., TRP configuration), resource allocation information related to transmission and reception based on M-TRP, and the like. The configuration information may be transmitted through higher layers (e.g., RRC, MAC CE). In addition, when the configuration information is defined or configured in advance, the corresponding step may be omitted.

For example, as in the above-described embodiment (e.g., embodiment 1 or a combination of one or more of its detailed examples), the configuration information may include CORESET-related configuration information (e.g., ControlResourceSet IE). The CORESET-related configuration information may include a CORESET-related ID (e.g., controlResourceSetID), a CORESET pool index (e.g., CORESETPoolIndex) for CORESET, time/frequency resource configuration of CORESET, and TCI information related to CORESET. For example, the configuration information may include information related to beam management/BFR, etc., as described in the above-described embodiments (e.g., embodiment 1 or a combination of one or more of its detailed examples).

For example, an operation in which the UE(100 or 200 of FIG. 11) may receive the configuration information from the network side (200 or 100 of FIG. 1) in step S105 may be implemented by the device of FIG. 11 to be described below. For example, referring to Figure 11, one or more processors 102 may control one or more transceivers 106 and/or one or more memories 104 to receive the configuration information, and one or more transceivers 106 may receive the configuration information from a network side.

The UE may transmit a reference signal for UL transmission through/using TRP 1 and/or TRP 2 to the network side (S110). For example, the UE may receive RS 1 and/or RS 2 for beam management/BFD through/using TRP1 and/or TRP 2 at the network side.

For example, an operation in which the UE (100 or 200 in FIG. 11) transmits the reference signal to the network side (200 or 100 in FIG. 11) in step S110 may be implemented by the device of FIG. 11 to be described below. For example, referring to Figure 11, one or more processors 102 may control one or more transceivers 106 and/or one or more memories 104 to transmit the reference signals, and the one or more transceivers 106 may transmit the reference signals to a network side.

The UE may perform beam management/BFR based on the RS 1 and/or RS 2 through/using TRP 1 and/or TRP 2 from the network side (S115). For example, a method of performing beam management/BFR may be performed based on the above-described embodiment (e.g., embodiment 1 or a combination of one or more of its detailed examples). For example, the UE may measure/ estimate a theoretical BLER based on the reception quality of RS 1 and/or RS 2, and determine BF accordingly.

For example, the above-described operation of performing beam management/BFR by the UE (100 or 200 of FIG. 11) in step S115 may be implemented by the device of FIG. 11. For example, referring to FIG. 11 , one or more processors 102 may control one or more memories 104 or the like to perform the beam management/BFR operation.

The UE may transmit the beam management/BFR report (e.g., BFRQ) to the network through/using TRP 1 and/or TRP 2 (S120). In this case, the beam management/BFR report (e.g., BFRQ, etc.) for TRP 1 and the beam management/BFR report (e.g., BFRQ, etc.) for TRP 2 may be transmitted separately or may be combined into one. In addition, the UE is configured to transmit a report on beam management/BFR (e.g., BFRQ, etc.) to the representative TRP (e.g. TRP 1), and transmission of a report (e.g., BFRQ, etc.) on beam management/BFR to another TRP (e.g., TRP 2) may be omitted. Alternatively, the UE may be configured to transmit a BFR report (e.g., BFRQ, etc.) through the same TRP as the TRP where the beam failure occurred. Alternatively, the UE may be set to transmit a BFR report (e.g., BFRQ, etc.) to a TRP other than the TRP where the beam failure occurred.

For example, the network side that receives the BF report/BFRQ, etc. through/using TRP 1 and/or TRP 2 from the UE may transmit new BM/BFR related RS information for beam recovery to the UE.

For example, an operation in which the UE (100/200 in Fig. 11) transmits a beam management/BFR report (e.g., BFRQ, etc.) from the network side (100/200 in Fig. 11) in step S120 described above may be implemented by the device of FIG. 11 to be described below. For example, referring to FIG. 11, one or more processors 102 may control one or more transceivers 106 and/or one or more memories 104, etc. to transmit beam management/BFR reports (e.g., BFRQ, etc.), and one or more transceivers 106 may transmit a beam management/BFR report (e.g., BFRQ, etc.) to the network side.

Through the beam determined based on the above-described process, the UE may receive DCI 1 and data 1 scheduled by the corresponding DCI 1 through/using TRP 1 from the network side. In addition, the UE may receive DCI 2 and data 2 scheduled by the corresponding DCI 2 through/using TRP 2 from the network side. DCIs (e.g., DCI 1 and DCI 2) and data (e.g., Data 1 and Data 2) may be transmitted through a control channel (e.g., PDCCH, etc.) and a data channel (e.g., PDSCH, etc.), respectively. For example, DCI 1 may be received based on a first CORESET having a CORESETPoolindex configured to 0 or not, and DCI 2 may be received based on a second CORESET having a CORESETPoolindex configured to 1. For example, the DCI (e.g., DCI 1, DCI 2) and/or data (e.g., data 1, data 2) may include control information/data related to operations described in the above-described method (e.g., embodiment 1 or a combination of one or more of its detailed examples).

As mentioned above, the aforementioned network-side/UE signaling and embodiments (e.g., embodiment 1 or a combination of one or more of its sub-examples) may be implemented by an apparatus to be described with reference to FIG. 11. For example, the network side (e.g., TRP 1 / TRP 2) may correspond to the first device 100 and the UE may correspond to the second device 200, and vice versa may be considered depending on circumstances.

For example, the aforementioned network-side/UE signaling and operations (e.g., embodiment 1 or a combination of one or more of its sub-examples) may be processed by one or more processors (e.g., 102, 202) of FIG. 11. The aforementioned network-side/UE signaling and operation (e.g., Example 1 or a combination of one or more of its sub-examples) may be stored in a memory (e.g., one or more memories of FIG. 11 (e.g., 104, 204) in the form of a command/program (e.g., instruction, executable code) for driving at least one processor (e.g., 102 or 202) of FIG. 11.

General Device to which the Present Disclosure may be applied

FIG. 11 is a diagram which illustrates a block diagram of a wireless communication system according to an embodiment of the present disclosure.

In reference to FIG. 11, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR R_AM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN (personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for performing beam failure recovery (BFR) by a user equipment (UE) in a wireless communication system, the method comprising:

   receiving, from a base station, configuration information including information related to a control resource set (CORESET) in which a plurality of transmission configuration indicator (TCI) states are configured; and
   detecting a beam failure instance (BFI) in a first beam failure detection-reference signal (BFD-RS) set for a first CORESET group including the CORESET,
   wherein each of a first BFD-RS resource corresponding to a first TCI state among the plurality of TCI states configured for the CORESET and a second BFD-RS resource corresponding to a second TCI state among the plurality of TCI states is independently included in one of the first BFD-RS set for the first CORESET group or the second BFD-RS set for the second CORESET group, and
   wherein the first BFD-RS resource is included in the first BFD-RS set.

2. The method of claim 1, wherein:
   based on indication information indicating a BFD-RS configured to include the second BFD-RS resource being received from the base station, the second BFD-RS resource is included in one of the first BFD-RS set or the second BFD-RS set based on the indication information

3. The method of claim 2, wherein:
   the indication information is included in at least one of an RRC(radio resource control) message, MAC(medium access control)-CE(control element), or DCI(downlink control information) and received from the base station.

4. The method of claim 1, wherein:
the second BFD-RS resource is included in the first BFD-RS set.

5. The method of claim 1, wherein:
the second BFD-RS resource is included in the second BFD-RS set.

6. The method of claim 1, wherein:
the second BFD-RS resource is included in one of the first BFD-RS set or the second BFD-RS set based on a number of TCI states and a predetermined threshold.

7. The method of claim 1, wherein:
based on a number of CORESETs for which the plurality of TCI states are configured among a total number of CORESETs included in the first CORESET group, the second BFD-RS resource is included in one of the first BFD-RS set or the second BFD-RS set.

8. The method of claim 1, wherein:
based on whether the CORESET is included only in the first CORESET group or included in both the first CORESET group and the second CORESET group, the second BFD-RS resource is included in one of the first BFD-RS set or the second BFD-RS set.

9. The method of claim 1, wherein:
based on the second BFD-RS resource being included in the second BFD-RS set, a BFI is detected in the second BFD-RS set.

10. The method of claim 1, wherein:
the BFD-RS resource is at least one of a channel state information-reference signal (CSI-RS) resource or a synchronization signal block (SSB) resource.

11. The method of claim 1, wherein:
the TCI state includes information indicating an RS having a quasi-co-location (QCL) relationship.

12. A user equipment (UE) performing beam failure recovery (BFR) in a wireless communication system, the UE comprising:

   at least one transceiver; and
   at least one processor coupled to the at least one transceiver;
   wherein the at least one processor is configured to:

      receive, from a base station through the at least one transceiver, configuration information including information related to a control resource set (CORESET) in which a plurality of transmission configuration indicator (TCI) states are configured; and
      detect a beam failure instance (BFI) in a first beam failure detection-reference signal (BFD-RS) set for a first CORESET group including the CORESET,
      wherein each of a first BFD-RS resource corresponding to a first TCI state among the plurality of TCI states configured for the CORESET and a second BFD-RS resource corresponding to a second TCI state among the plurality of TCI states is independently included in one of the first BFD-RS set for the first CORESET group or the second BFD-RS set for the second CORESET group, and
      wherein the first BFD-RS resource is included in the first BFD-RS set.

13. A method for performing beam failure recovery (BFR) by a base station in a wireless communication system, the method comprising:

   transmitting, to a user equipment (UE), configuration information including information related to a control resource set (CORESET) in which a plurality of transmission configuration indicators (TCI) states are configured; and
   receiving, from the UE, a beam failure recovery request (BFRQ) based on a beam failure instance (BFI) being detected more than a certain number of times in a first bean failure detection (BFD)-reference signal (RS) configured for a first CORESET group including the CORESET by the UE,

wherein each of a first BFD-RS resource corresponding to a first TCI state among the plurality of TCI states configured for the CORESET and a second BFD-RS resource corresponding to a second TCI state among the plurality of TCI states is independently included in one of the first BFD-RS set for the first CORESET group or the second BFD-RS set for the second CORESET group, and

wherein the first BFD-RS resource is included in the first BFD-RS set.

**14.** A base station for performing beam failure recovery (BFR) in a wireless communication system, the base station comprising:

at least one transceiver; and
at least one processor coupled to the at least one transceiver;
wherein the at least one processor is configured to:

transmitting, to a user equipment (UE) through the at least one transceiver, configuration information including information related to a control resource set (CORESET) in which a plurality of transmission configuration indicators (TCI) states are configured; and

receiving, from the UE through the at least one transceiver, a beam failure recovery request (BFRQ) based on a beam failure instance (BFI) being detected more than a certain number of times in a first bean failure detection (BFD)-reference signal (RS) configured for a first CORESET group including the CORESET by the UE,

wherein each of a first BFD-RS resource corresponding to a first TCI state among the plurality of TCI states configured for the CORESET and a second BFD-RS resource corresponding to a second TCI state among the plurality of TCI states is independently included in one of the first BFD-RS set for the first CORESET group or the second BFD-RS set for the second CORESET group, and

wherein the first BFD-RS resource is included in the first BFD-RS set.

**15.** A processing device configured to control a user equipment (UE) to perform beam failure recovery (BFR) in a wireless communication system, the processing device comprising:

at least one processor; and
at least one computer memory operatively coupled to the at least one processor and storing instructions for performing operations upon being executed by the at least one processor;
the operations include:

receiving, from a base station, configuration information including information related to a control resource set (CORESET) in which a plurality of transmission configuration indicator (TCI) states are configured; and

detecting a beam failure instance (BFI) in a first beam failure detection-reference signal (BFD-RS) set for a first CORESET group including the CORESET,

wherein each of a first BFD-RS resource corresponding to a first TCI state among the plurality of TCI states configured for the CORESET and a second BFD-RS resource corresponding to a second TCI state among the plurality of TCI states is independently included in one of the first BFD-RS set for the first CORESET group or the second BFD-RS set for the second CORESET group, and

wherein the first BFD-RS resource is included in the first BFD-RS set.

**16.** At least one non-transitory computer readable medium storing at least one instruction,

based on the at least one instruction being executed by at least one processor, an apparatus for performing beam failure recovery (BFR) in a wireless communication system controls to:

receive, from a base station, configuration information including information related to a control resource set (CORESET) in which a plurality of transmission configuration indicator (TCI) states are configured; and

detect a beam failure instance (BFI) in a first beam failure detection-reference signal (BFD-RS) set for a first CORESET group including the CORESET,

wherein each of a first BFD-RS resource corresponding to a first TCI state among the plurality of TCI states configured for the CORESET and a second BFD-RS resource corresponding to a second TCI state among the plurality of TCI states is independently included in one of the first BFD-RS set for the first CORESET group or the second BFD-RS set for the second CORESET group, and

wherein the first BFD-RS resource is included in the first BFD-RS set.

FIG.1

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

FIG.4

# FIG.5

Resource grid

A carrier
(up to 3300 subcarriers,i.e.,275 RBs)

A BWP

1 RB=12 subcarrier

1 RE

1 subcarrier

1 Symbol

l=0  ‥‥

k=0

# FIG.6

| INITIAL CELL<br>SEARCH | SYSTEM<br>INFORMATION<br>RECEPTION | RANDOM ACCESS PROCEDURE | GENERAL DL/UL Tx/Rx |
|---|---|---|---|

PSS/SSS&
[DLRS]&
PBCH

PDCCH/
PDSCH
(BCCH)

PRACH PDCCH/
PDSCH PUSCH PDCCH/
PDSCH

PDCCH/
PDSCH PUSCH/
PUCCH

S601    S602    S603    S604    S605    S606    S607    S608

· DL/UL ACK/NACK
· UE CQI/PMI RI REPORT
  USING PUSCH AND PUCCH

FIG.7

FIG.8

RECEIVING CONFIGURATION INFORMATION INCLUDING
INFORMATION RELATED TO A CORESET IN WHICH A PLURALITY
OF TCI STATES ARE CONFIGURED FROM THE BASE STATION  —— S810

DETECTING A BFI IN THE FIRST BFD-RS SET FOR THE
FIRST CORESET GROUP INCLUDING THE CORESET  —— S820

FIG.9

```
┌─────────────────────────────────────────────────────┐
│   TRANSMITTING CONFIGURATION INFORMATION INCLUDING    │
│  INFORMATION RELATED TO CORESET IN WHICH A PLURALITY   │ ～ S910
│       OF TCI STATES ARE CONFIGURED TO THE UE          │
└─────────────────────────────────────────────────────┘
                          │
                          ▼
┌─────────────────────────────────────────────────────┐
│ RECEIVING A BFRQ FROM THE UE BASED ON A BFI BEING DETECTED │
│   MORE THAN A CERTAIN NUMBER OF TIMES IN A FIRST BFD-RS    │ ～ S920
│  CONFIGURED FOR A FIRST CORESET GROUP INCLUDING THE CORESET │
└─────────────────────────────────────────────────────┘
```

FIG.10

```
┌──────────────┐                    ┌──────────────┐
│ NETWORK SIDE │                    │      UE      │
│ (TRP1/TRP2)  │                    │              │
└──────┬───────┘                    └──────┬───────┘
       │  CONFIGURATION INFORMATION        │
       │──────────────────────────────────▶├── S105
       │                                    │
       │         REFERENCE SIGNAL           │
       │──────────────────────────────────▶├── S110
       │                                    │
       │                    ┌──────────────────────┐
       │                    │  PERFORMING BM/BFR    ├── S115
       │                    └──────────────────────┘
       │           BEAM/BFR REPORT          │
       │◀───────────────────────────────────── S120
       │                                    │
```

FIG.11

EP 4 270 809 A1

# EP 4 270 809 A1

## INTERNATIONAL SEARCH REPORT

| International application No. |
|---|
| **PCT/KR2021/019461** |

### A. CLASSIFICATION OF SUBJECT MATTER

**H04B 7/0408**(2017.01)i; **H04B 7/024**(2017.01)i; **H04B 7/06**(2006.01)i; **H04W 72/04**(2009.01)i; **H04W 74/00**(2009.01)i; **H04L 5/00**(2006.01)i

According to International Patent Classification (IPC) or to both national classification and IPC

### B. FIELDS SEARCHED

Minimum documentation searched (classification system followed by classification symbols)

H04B 7/0408(2017.01); H04W 16/28(2009.01); H04W 24/04(2009.01); H04W 24/10(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔 실패 복구(beam failure recovery, BFR), 전송 설정 지시자(transmission configuration indicator, TCI), 제어 자원 세트(control resource set, CORESET), 빔 실패 검출-참조 신호(beam failure detection-reference signal, BFD-RS), 빔 실패 인스턴스(beam failure instance, BFI)

### C. DOCUMENTS CONSIDERED TO BE RELEVANT

| Category* | Citation of document, with indication, where appropriate, of the relevant passages | Relevant to claim No. |
|---|---|---|
| X<br>Y | MODERATOR (CATT). Summary on beam management for simultaneous multi-TRP transmission with multiple Rx panels. R1-2009500, 3GPP TSG RAN WG1 Meeting #103-e, e-Meeting. 26 November 2020.<br>See sections 2.2-3.3. | 1-5,11-16<br>6-10 |
| Y | MEDIATEK INC. Summary 2 on Remaing issues on Beam Failure Recovery Document for: Discussion. R1-1807796, 3GPP TSG RAN WG1 Meeting #93. Busan, Korea. 24 May 2018.<br>See sections 3.1.1-3.1.7. | 6-10 |
| A | NTT DOCOMO. Remaining issues on beam management. R1-1809138, 3GPP TSG RAN WG1 Meeting # 94. Gothenburg, Sweden. 11 August 2018.<br>See section 3. | 1-16 |
| A | KR 10-2019-0130174 A (SAMSUNG ELECTRONICS CO., LTD.) 21 November 2019 (2019-11-21)<br>See paragraphs [0099]-[0105]; and figure 13a. | 1-16 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 March 2022** | **01 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/019461**

**C.      DOCUMENTS CONSIDERED TO BE RELEVANT**

| Category* | Citation of document, with indication, where appropriate, of the relevant passages | Relevant to claim No. |
|---|---|---|
| A | KR 10-2019-0107568 A (ELECTRONICS AND TELECOMMUNICATIONS RESEARCH INSTITUTE) 20 September 2019 (2019-09-20)<br>See paragraphs [0057]-[0062]; and figure 3. | 1-16 |

Form PCT/ISA/210 (second sheet) (July 2019)

**INTERNATIONAL SEARCH REPORT**
Information on patent family members

International application No.

**PCT/KR2021/019461**

| Patent document cited in search report | | | Publication date (day/month/year) | Patent family member(s) | | | Publication date (day/month/year) |
|---|---|---|---|---|---|---|---|
| KR | 10-2019-0130174 | A | 21 November 2019 | CN | 110637496 | A | 31 December 2019 |
| | | | | EP | 3583814 | A1 | 25 December 2019 |
| | | | | EP | 3583814 | A4 | 22 January 2020 |
| | | | | US | 11134492 | B2 | 28 September 2021 |
| | | | | US | 2018-0302889 | A1 | 18 October 2018 |
| | | | | US | 2021-0392634 | A1 | 16 December 2021 |
| | | | | WO | 2018-190617 | A1 | 18 October 2018 |
| KR | 10-2019-0107568 | A | 20 September 2019 | US | 2021-0006456 | A1 | 07 January 2021 |
| | | | | WO | 2019-177272 | A1 | 19 September 2019 |

Form PCT/ISA/210 (patent family annex) (July 2019)